# EUROPEAN PATENT APPLICATION

(11) **EP 2 557 477 A2**
(43) Date of publication of application: **13.02.2013**
(21) Application number: 11192073.2
(22) Date of filing: 06.12.2011
(51) Int. Cl.: G06F 1/26

(54) **Data processing device including a main battery that is replaceable while the data processing device is in operation and a method applicable thereto**

(30) Priority: 10.08.2011 TW 100128491
(71) Applicant: Askey Technology (Jiangsu) Ltd., Economic-Technological Development Area Wujiang Jiangsu (CN); Askey Computer Corp., New Taipei City 235 (TW)
(72) Inventor: Lin, Yu-Geng, 100 Taipei (TW); Hsieh, Ching-Feng, Taipei City 108 (TW)
(74) Representative: Bonvicini, Davide

(57) **Abstract**

A data processing device is provided, which includes: a main battery that supplies main power to the data processing device; a backup battery that supplies backup power to the data processing device when the main battery does not supply the main power to the data processing device; a receiving module that receives a standby command or a recovery command; a standby module that enables the data processing device to operate in a standby mode when the receiving module receives the standby command, allowing replacement of the main battery; a recovery module that determines, when the data processing device is operating in the standby mode, whether the main power is enough to enable the data processing device to operate normally, and enables the data processing device to operate in an operation mode when the main power is determined to be enough to enable the data processing device to operate normally.

## Description

### BACKGROUND OF THE INVENTION

### 1. Field of the Invention

The invention relates to a data processing device and a method applicable thereto, and, in particular, to a data processing device having a replaceable battery and a method applicable thereto.

### 2. Background

Data processing devices, such as mobile phones, laptop computers or tablet computers have already become necessary commodity. Most of the data processing devices are equipped with a replaceable battery since they are manufactured.

For example, the rear side of a mobile phone is designed with a battery receiving compartment for a battery to be received therein, and the battery receiving compartment is equipped with conductive contacts. When the battery is installed at a correct position in the battery receiving compartment, power of the battery is supplied through the conductive contacts to the mobile phone. When the power of the battery is depleted and the mobile phone thus cannot operate normally, the battery with depleted power may be replaced with another battery that has power enough to enable the mobile phone to operate normally.

However, the battery cannot be replaced with another battery until the mobile phone (a data processing device) is turned off, and the mobile phone cannot operate until it is turned on. It takes time to turn off and turn on the mobile phone.

### SUMMARY OF THE INVENTION

In view of the above-mentioned problems of the prior art, the present invention to provide a data processing device including a main battery that is replaceable while the data processing device is in operation, the data processing device comprising: a main battery that supplies main power to the data processing device; a backup battery that supplies backup power to the data processing device when the main battery fails to supply the main power to the data processing device; a receiving module that receives a standby command or a recovery command; a standby module that enables the data processing device to operate in a standby mode when the receiving module receives the standby command, allowing replacement of the main battery; and a recovery module that determines, when the data processing device is operating in the standby mode, whether the main power is enough to enable the data processing device to operate normally, and enables the data processing device to operate in an operation mode when the main power is determined to be enough to enable the data processing device to operate normally.

The present invention further provides a method applicable to a data processing device that comprises a main battery and a backup battery and operates in an operation mode or a standby mode, the method comprising: (1) enabling the data processing device to operate in the standby mode, and enabling the backup battery to supply backup power to the data processing device after the main battery is removed; (2) enabling the data processing device to determine whether the main battery is installed therein, and determining whether main power of the main battery is enough to enable the data processing device to operate normally; and (3) if the main power is determined to be enough to enable the data processing device to operate normally, enabling the data processing device to operate in the operation mode, and enabling the main battery to supply the main power to the data processing device.

Compared with the prior art, a data processing device according to the present invention not only has a main battery, but also has a backup battery that supplies backup power to the data processing device when the main battery does not supply main power to the data processing device. The data processing device further includes a receiving module, a standby module and a recovery module. Therefore, a depleted battery may be replace with another battery while the data processing device is still in operation.

### BRIEF DESCRIPTION OF DRAWINGS

FIG. 1 is a functional block diagram of a data processing device of an embodiment according to the present invention; and
FIG. 2 is a flow chart of a method applicable to the data processing device shown in FIG 1 according to the present invention.

### DETAILED DESCRIPTION OF PREFERRED EMBODIMENTS

The following explains the invention by embodiments, whoever is familiar with this technical field can easily understand advantages and efficacy of the invention. Of course, the invention can also be implemented or applied by other embodiments.

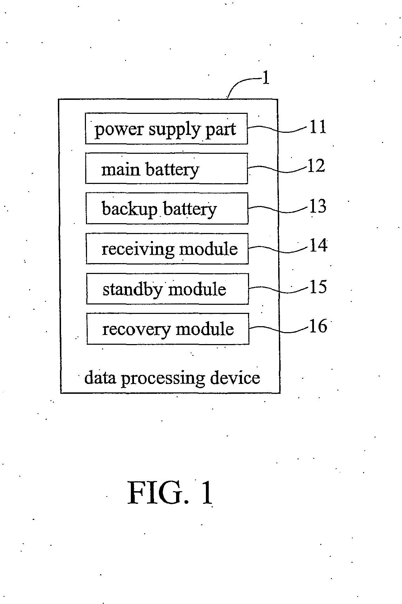

FIG. 1 is a functional block diagram of a data processing device 1 of an embodiment according to the present invention. The data processing device 1 includes a power supply part 11, a main battery 12, a backup battery 13, a receiving module 14, a standby module 15, and a recovery module 16. In an embodiment, the receiving module 14, the standby module 15 and the recovery module 16 are software installed in the data processing device 1, and the data processing device 1 is a mobile phone, a laptop computer or a tablet computer that may operate in a standby mode or in an operation mode. The data processing device 1 consumes less power in the standby mode than in the operation mode.

The power supply part 11 is located in a battery receiving compartment (not shown) on a rear side of the data processing device 1. The power supply part 11 has a plurality of metal contacts installed therein for supplying power of the battery to the data processing device 1 when the battery is received in the power supply part 11.

The main battery 12 is replaceably installed in the power supply part 11, and optionally supplies main power to the data processing device 1 through the metal contacts. In an embodiment, a fixture is installed between the main battery 12 and the power supply part 11 for the replaceable installation of the main battery 12 in the power supply part 11.

The backup battery 13 supplies backup power to the data processing device 1 when the main battery 12 does not supply the main power to the data processing device 1. For example, the backup battery 13 automatically supplies the backup power to the data processing device 1 when the main battery 12 is removed from the power supply part 11 or the main power is depleted. In an embodiment, the backup battery 13 is securedly installed in the data processing device 1 and can be charged by an external power supply or the main battery 12.

The receiving module 14 receives a standby command or a recovery command input by a user. Accordingly, the data processing device 1 is equipped with a power key. When the user presses the power key, the receiving module 14 receives the standby command or the recovery command. Additionally, the receiving module 14 may have a user interface. When the power key is pressed, the user interface is initiated, and the user is allowed to touch the user interface to input the standby command or the recovery command. In an embodiment, the user interface includes a list of options, such as usage modes, ringing modes, a turning-off mode, a standby mode, and a recovery mode. Other keys may be installed in the data processing device 1, and the standby command and the recovery command are issued by pressing the combination of the power key and the other keys. The standby module 15 enables the data processing device 1 to operate in the standby mode when the receiving module 14 receives the standby command, allowing the main battery 12 to be replaced with another battery. When the receiving module 14 receives the standby command, the standby mode of the user interface may be selected, for the standby command to be generated and received by the receiving module 14. Accordingly, the standby module 15 enables the data processing device 1 to operate in the standby mode such that the data processing device 1 consumes less power.

The recovery module 16 determines whether the main power of the main battery 12 is enough to enable the data processing device 1 to operate normally when the data processing device 1 is in the standby mode, and enables the data processing device 1 to operate in the operation mode when the main power is determined to be enough to enable the data processing device 14 to operate normally and the receiving module 14 receives the recovery command. Besides, the recovery mode of the user interface may be selected, and then the data processing device 1 may be enabled to operate in the operation mode when the main power is determined to be enough to enable the data processing device 1 to operate normally and the receiving module 14 receives the recovery command.

In another embodiment, the recovery module 16 may still enable the data processing device to operate in the operation mode after the main power of the main battery 12 is determined to be enough to enable the data processing device 1 to operate normally for a certain period of time. For example, when a user finds that the main power of the main battery 12 is depleted and is ready to replace the depleted main battery 12 with another battery, he may input the standby command into the receiving module 14. Accordingly, the standby module 15 enables the data processing device 1 to operate in the standby mode, and the user may then replace the depleted main battery 12 with another battery.

While the main battery 12 is removed and the replaced battery is not yet installed in the power supply part 11, the backup battery 13 supplies the backup power to the data processing device 1, allowing the data processing device 1 to keep operating in the standby mode, omitting the time-consuming turning-on and turning-off procedures and the possibility of losing data.

When a new main battery 12 (i.e., the another battery described above) is installed in the power supply part 11, a user may input the recovery command into the receiving module 14, and the recovery module 16 may then determines whether the new main battery 12 has a main power that is enough to enable the data processing device 1 to operate normally. When the main power of the new main battery 12 is determined to be enough and the receiving module 14 receives the recovery command, the recovery module 16 enables the data processing device 1 to operate in the operation mode.

In an embodiment, because the recovery module 16 determines whether the main power of the main battery 12 is enough, and does not enable the data processing device 1 to operate in the operation mode until the main power of the main battery 12 is determined enough and the receiving module 14 receives the recovery command, a situation must be detected in which the data processing device determines that the depleted main battery 12 is replaced with another battery but in fact that the another battery has not yet replaced the depleted main battery 12.

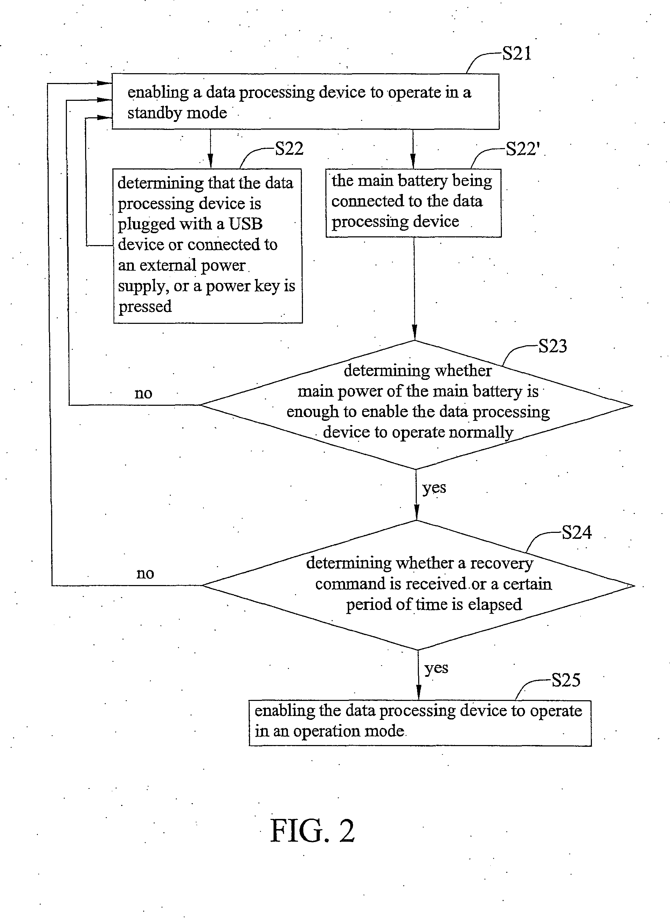

FIG. 2 is a flow chart of a method applicable to the data processing device 1 according to the present invention.

In step S21, the data processing device 1 is in the standby mode, allowing the main battery 12 to be replaced with another battery. The method then proceeds to step S22.

Notice that in step S21 a user is allowed to replace the main battery 12 with another battery, which is described previously, further description thereto is hereby omitted.

In step S22, the data processing device 1 determines whether a USB device is plugged therein, whether an external power supply is connected thereto, or whether a power key is pressed, when the main battery 12 is not connected to the data processing device 1. If the data processing device 1 is plugged with the USB device or connected to the external power supply, or the power key is pressed, the method returns to step S21 and the data processing device 1 keeps operating in the standby mode. In step S22', the main battery 12 is connected to the data processing device 1. Then, step S23 is proceeded.

In step S23, the recovery module 16 determines whether the power received by the power supply part 11 (i.e., the main power of the main battery 12) is enough to enable the data processing device 1 to operate normally. If the power is not enough, the method returns to step S21 in which the data processing device 1 keeps operating in the standby mode. If the power is enough, and it is determined that a new main battery 12 that have enough main power is installed in the power supply part 11, the method proceeds to step S24.

Notice that steps S22 and S23 may be conducted at the same or different time. To simplify explanation, FIG. 2 shows that steps S22 and S23 are conducted at different time.

In step S24, the recovery module 16 determines whether the receiving module 14 receives the recovery command or a certain period of time is elapsed. If it is determined that the receiving module 14 receives the recovery command or the certain period of time is elapsed, the method proceeds to step S25, otherwise, the method proceeds to step S21.

In step S25, the data processing device 1 is enabled to operate in the operation mode.

To sum up, a data processing device according to the present invention not only has a main battery and a power supply part, but also has a backup battery that supplies backup power to the data processing device when the main battery does not supply main power to the data processing device. The data processing device further includes a receiving module that receives a standby command or a recovery command, a standby module that enables the data processing device to operate in a standby mode when the receiving module receives the standby command, and a recovery module that enables the data processing device to operate in an operation mode when the main power of the main battery is determined not enough to enable the data processing device to operate normally. Therefore, the data processing device according to the present invention not only allows a user to replace the main battery with another battery when the data processing device is still turned on, but also avoids the risk of damage or loss of data due to mis judgement of replacement of the main battery.

The foregoing descriptions of the detailed embodiments are only illustrated to disclose the features and functions of the present invention and not restrictive of the scope of the present invention. It should be understood to those in the art that all modifications and variations according to the spirit and principle in the disclosure of the present invention should fall within the scope of the appended claims.

## Claims

1. A data processing device including a main battery that is replaceable while the data processing device is in operation, the data processing device comprising:
a main battery that supplies main power to the data processing device;
a backup battery that supplies backup power to the data processing device when the main battery fails to supply the main power to the data processing device;
a receiving module that receives a standby command or a recovery command;
a standby module that enables the data processing device to operate in a standby mode when the receiving module receives the standby command, so as for the main battery to be replaced; and
a recovery module that determines, when the data processing device is operating in the standby mode, whether the main power is enough to enable the data processing device to operate normally, and enables the data processing device to operate in an operation mode when the main power is determined to be enough to enable the data processing device to operate normally.

2. The data processing device of claim 1, wherein the backup battery is charged by an external power supply or the main battery.

3. The data processing device of claim 1, wherein the backup battery is installed in the data processing device.

4. The data processing device of claim 1, further comprising a power key, for the receiving module to receive the standby command or the recovery command input by the power key is pressed or via a user interface that is initiated when the power key is pressed.

5. The data processing device of claim 1, wherein the recovery module enables the data processing device to operate in the operation mode when the main power is determined to be enough to enable the data processing data to operate normally and the receiving module receives the recovery command.

6. The data processing device of claim 1, wherein the recovery module enables the data processing device to operate in the operation mode after having determined that the main power is enough to enable the data processing device to operate normally for a certain period of time.

7. A method applicable to a data processing device that comprises a main battery and a backup battery and operates in an operation mode or a standby mode, the method comprising:
(1) enabling the data processing device to operate in the standby mode, and enabling the backup battery to supply backup power to the data processing device after the main battery is removed;
(2) enabling the data processing device to determine whether the main battery is installed therein, and determining whether main power of the main battery is enough to enable the data processing device to operate normally; and
(3) if the main power is determined to be enough to enable the data processing device to operate normally, enabling the data processing device to operate in the operation mode, and enabling the main battery to supply the main power to the data processing device.

8. The method of claim 7, wherein in step (1) when the data processing device is in the standby mode and the main power is depleted, the backup battery is enabled to supply the backup power to the data processing device.

9. The method of claim 7, wherein in step (1) the main battery is removed when the main power is depleted.

10. The method of claim 7, further comprising, after step (1) and before step (2), enabling the backup battery to supply the backup power to the data processing device when a USB device is plugged into the data processing device, when the data processing device is connected to an external power supply, or when a power key is pressed.

11. The method of claim 7, wherein in step (2) the backup battery is enabled to supply the backup power to the data processing device when the main power is determined to be not enough to enable the data processing data to operate normally.

12. The method of claim 11, wherein in step (2) the backup battery is enabled to supply the backup power to the data processing device when the main power is determined to be not enough to enable the data processing device to operate normally and a USB device is plugged into the data processing device, the data processing device is connected to an external power supply, or a power key is pressed.

13. The method of claim 7, wherein in step (3) when the main battery is installed in the data processing device and the main power is enough to enable the data processing device to operate normally, the recovery module is enabled to determine whether the receiving module receives the recovery command, so as to enable the data processing device to operate in the operation mode when the receiving module receives the recovery command.

14. The method of claim 7, wherein in step (3) when the main battery is installed in the data processing device and the main power is enough to enable the data processing device to operate normally, the recovery module is enabled to determine whether a certain period of time is elapsed, so as to enable the data processing device to operate in the operation mode after the certain period of time is elapsed.
